# EUROPÄISCHE PATENTSCHRIFT

(11) **EP 0 510 034 B1**
(45) Veröffentlichungstag und Bekanntmachung des Hinweises auf die Patenterteilung: **15.03.1995**
(21) Anmeldenummer: 91901762.4
(22) Anmeldetag: 22.12.1990
(51) Int. Cl.: B29C 51/00, E04F 19/04

(54) **VERFAHREN ZUR HERSTELLUNG VON VORGEFERTIGTEN NAHTLOSEN SOCKELLEISTEN-ECKSTÜCKEN**
PROCESS FOR MANUFACTURING SEAMLESS PREFABRICATED SKIRTING BOARD CORNER PIECES
PROCEDE DE PRODUCTION DE GOUSSETS DE PLINTHES SANS JOINT PREFABRIQUES

(30) Priorität: 16.01.1990 DE 4001055
(43) Veröffentlichungstag der Anmeldung: 28.10.1992
(73) Patentinhaber: HT TROPLAST AG, D-53839 Troisdorf (DE)
(72) Erfinder: KRAMBRICH, Karlheinz, D-5300 Bonn 1 (DE); NEUSCHAEFER-RUBE, Karl-Reinhard, D-5205 St. Augustin 3 (DE); WINTER, Heinz, D-5000 Köln 1 (DE)
(86) Internationale Anmeldenummer: EP9002298
(87) Internationale Veröffentlichungsnummer: WO9110554

(56) Entgegenhaltungen:
- DE-A- 2 128 024
- DE-A- 2 553 231
- DE-A- 3 522 420
- DE-B- 1 068 005
- GB-A- 721 086
- GB-A- 1 023 190
- GB-A- 1 029 631
- US-A- 3 115 678

## Beschreibung

### Technisches Gebiet

Die Erfindung betrifft ein Verfahren zur Herstellung von vorgefertigten nahtlosen (fugenlosen) Sockelleisten-Eckstücken. Die Sockelleisten-Eckstücke können dabei gerundet oder eckig, d. h. mit geringem Biegeradius, sowie als Innen- oder Außenecken konzipiert sein.

Zur fugenlosen Ausbildung des Boden-Wand-Übergangs in Gebäuden werden oft L-förmige, thermoplastische oder gummiartige Profile eingesetzt, die meistens durch Extrusion hergestellt werden.

Zum einfacheren Verlegen dieser Sockelleistenprofile im Bereich von Innen- und Außenecken werden z. T. vorgefertigte, angepaßte Uni-Profil-Eckstücke eingesetzt.

### Stand der Technik

Die Sockelleisten-Eckstücke werden beispielsweise durch Spritzgießen hergestellt. Diese Sockelleisten-Eckstücke haben, mit extrudierten Profilen zusammen eingebaut, u. a. den Nachteil, daß sie, bedingt durch die unterschiedlichen Herstellungsverfahren, unterschiedliche optische und physikalische Eigenschaften aufweisen. Weiterhin weisen extrudierte Sockelleisten und spritzgegossene Sockelleisten-Eckstücke in den äußeren Abmessungen (Höhe) z. T. hohe Toleranzen auf, die bei der Verlegung nicht ausgeglichen werden können.

Abgesehen von den Fällen, in denen die unifarbene Sockelleiste bewußt als Gestaltungsmittel eingesetzt wird, wird sie in der Regel als ästethisch störender Streifen zwischen Wandfläche und Bodenbelag angesehen.

Aus der DE-C2-35 22 420 ist bereits ein Verfahren zur Herstellung von vorgefertigten nahtlosen Sockelleisten-Eckstücken bekannt, wobei als Ausgangsmaterial L-förmige extrudierte Sockelleisten verwendet werden. Dieses Verfahren eignet sich jedoch nicht zur Herstellung dessinierter Sockelleisten-Eckstücke. Weiterhin ist bei diesen Sockelleisten-Eckstücken lediglich ein Eckwinkel abgerundet, während der Übergang vom Boden- zum Wandbereich einen geringen Knickradius aufweist.

Aus der GB-A 721,086 ist ein Verfahren zur Herstellung von Innen- und Außenecken aus Linoleum bekannt, bei dem eine Holzleiste als Formstabilisierung mit dem passend gebogenen Linoleum-Stück verbunden wird. Dieses Verfahren eignet sich nicht zur Herstellung nahtloser Sockelleisten-Eckstücke.

Aus dem Firmenprospekt "MIPOLAN-Verlegeanleitung", Firma Hüls Troisdorf AG, Seiten 22 bis 28, veröffentlicht Juli 1988, ist bereits ein Verfahren zur Herstellung richtungsfrei dessinierter Sockelleisten-Ecken bekannt, bei dem z. B. durch thermisches Verschweißen im Eckbereich ein Zuschnitt eines Bodenbelages zu der Ecke verarbeitet wird. Eine Herstellung abgerundeter Ecken, d. h. mit Biegeradien von 5 bis 100 mm, ist nach diesem Verfahren nicht möglich. Ebenso weist die Ecke wenigstens eine Fuge (Naht) auf.

### Aufgabe

Aufgabe der vorliegenden Erfindung ist es daher, ein Verfahren zur Herstellung von vorgefertigten nahtlosen Sockelleisten-Eckstücken zur Verfügung zu stellen, das auch die Herstellung in jeder Richtung abgerundeter und richtungsfrei dessinierter Sokkelleisten-Eckstücke ermöglicht.

### Darstellung der Erfindung

Die Erfindung löst diese Aufgabe durch ein Verfahren mit den Merkmalen des Anspruchs 1, bevorzugt in Verbindung mit einem oder mehreren der Merkmale der Unteransprüche.

Erfindungsgemäß wird als Ausgangsmaterial zur Herstellung der Sockelleisten-Eckstücke ein im wesentlichen ebener, plattenförmiger Zuschnitt aus thermoplastischem Kunststoff verwendet. Bevorzugt wird hierzu ein Abschnitt eines thermoplastischen Fußboden- oder Wandbelages verwendet, insbesondere der gleiche Belag, der für die angrenzende Fußbodenfläche verwendet wird. Der Zuschnitt weist dabei eine Fläche - die in Aufsicht sichtbare Oberfläche - auf, die wenigstens dem 1,2fachen, bevorzugt dem 2- bis 5fachen der Fläche des fertigen Sockelleisten-Eckstückes entspricht.

Der Zuschnitt wird bis zur thermoplastischen Verformbarkeit erwärmt. Soweit handelsübliche Weich-PVC-Fußbodenbeläge als Ausgangsmaterial verwendet werden, beträgt die Temperatur ca. 150 bis 190, bevorzugt 170 bis 180° C. Die Erwärmung erfolgt bevorzugt in einem Wärmeschrank o. dgl., wobei diese über einen längeren Zeitraum von bevorzugt 5 bis 15 min. vorgenommen wird. Die Differenz zwischen der Oberflächentemperatur und der Temperatur im Inneren des Zuschnitts sollte dabei möglichst gering sein.

Der erwärmte Zuschnitt wird anschließend entsprechend der gewünschten abgerundeten oder scharfkantigen Form dreidimensional verformt. Hierzu wird der Zuschnitt bevorzugt lose auf den unteren Teil einer zweiteiligen Form (Unterstempel, Oberstempel) gelegt und durch Anpressen der oberen Form auf die untere Form gedrückt. Die Verformung erfolgt bevorzugt in der Art, daß der plattenförmige Zuschnitt möglichst gleichmäßig über die Fläche verteilt verformt wird, um Dickentoleranzen, insbesondere im Kantenbereich des späteren Sockelleisten-Eckstückes, gering zu halten. Der Zuschnitt sollte beim Zufahren der zweiteiligen Form im Kantenbereich des Zuschnitts nicht fest fixiert werden, sondern frei verschiebbar sein, um Streckungen in diesem Bereich so gering wie möglich zu halten. Dadurch, daß der verwendete plattenförmige Zuschnitt eine wenigstens 1,2fache, bevorzugt 2- bis 5fache Fläche des fertigen Sockelleisten-Eckstückes aufweist, wird eine Faltenbildung beim Schließen der Form verhindert und die notwendigen Streckungen bzw. Stauchungen des ebenen Ausgangsmaterials auf eine möglichst große Fläche verteilt, so daß eine Verzerrung der Dessinierung minimiert wird.

Nach Abkühlen des verformten Zuschnitts wird die Form entfernt und der Zuschnitt der Form entnommen. Anschließend wird das Sockelleisten-Eckstück entlang der gewünschten Kanten beschnitten, insbesondere unter Zuhilfenahme einer entsprechenden Schablone.

Nach einer bevorzugten Ausführung des erfindungsgemäßen Verfahrens ist der im wesentlichen ebene, plattenförmige Zuschnitt aus thermoplastischem Kunststoff richtungsfrei dessiniert. Insbesondere wird bevorzugt der gleiche Belag als Ausgangsmaterial verwendet, der für den angrenzenden Boden- bzw. Wandbelag verwendet wird.

Bevorzugt wird die Verformung des plattenförmigen Zuschnitts zu der dreidimensionalen Form dieses Sockelleisten-Eckstückes derart vorgenommen, daß die Verformung an jeder Stelle des Zuschnitts in jeder Richtung parallel zur Oberfläche etwa im gleichen Maß erfolgt.

Das beschnittene Sockelleisten-Eckstück weist bevorzugt Kanten gleicher Dicke auf, wobei die Dickentoleranz bevorzugt kleiner 30 %, insbesondere kleiner 10 %, liegt. Eine geringe Dickentoleranz der Kanten des Sockelleisten-Eckstückes ist von wesentlicher Bedeutung für eine einwandfreie Verschweißung mit angrenzenden Boden- bzw. Wandbelägen.

Die erfindungsgemäßen Sockelleisten-Eckstücke weisen auch nach der Verformung eine Dessinierung auf, die im wesentlichen der Dessinierung des eingesetzten plattenförmigen Zuschnitts entspricht. Insbesondere bei richtungsfrei dessiniertem Ausgangsmaterial ist auch das fertige Sockelleisten-Eckstück richtungsfrei dessiniert.

### Kurze Beschreibung der Zeichnungen

Die Erfindung wird im folgenden anhand der Zeichnungen näher erläutert:
Es zeigen dabei
- Fig. 1 -: eine perspektivische Ansicht einer Sockelleisten-Aussenecke,
- Fig. 2 -: eine perspektivische Ansicht einer Sockelleisten-Innenecke,
- Fig. 3 -: einen fertig verlegten Boden-Wand-Anschluß mit Innen- und Außenecke.

### Bester Weg zur Ausführung der Erfindung

Gemäß dem dargestellten Ausführungsbeispiel wird von einem quadratischen Zuschnitt eines handelsüblichen homogenen, richtungsfrei dessinierten PVC-Bodenbelags (MIPOLAM^{R} 500 Color), hergestellt nach dem Verfahren entsprechend der EP-A1-0 226 946, mit einer Kantenlänge von 450 mm (Fläche ca. 20 dm²) und einer Dicke von 2 mm ausgegangen. Der Zuschnitt wird im Umluftofen in 8 min. bzw. auf beiden Seiten mittels Infrarot-Wärmestrahlung auf eine Temperatur von ca. 170 bis 180° C aufgeheizt und anschließend in die Form (Unterstempel) eingelegt.

Die obere Form (Oberstempel) wird anschließend von oben auf den lose aufgelegten Zuschnitt gefahren, wobei das Material des Zuschnitts entsprechend verformt wird. Die obere und die untere Form sind dabei so ausgebildet, daß bei vollständigem Zusammenfahren der oberen und der unteren Form jeweils ein etwa gleich großer Teil des Zuschnitts in Richtung der oberen und der unteren Form bewegt werden bzw., daß jede der beiden Formen in Teilbereichen erhaben und in anderen Teilbereichen zurückspringend ausgebildet ist.

Hierdurch wird eine besonders gleichmäßige Verteilung der notwendigen Streckung des Materials auf die gesamte Fläche erreicht.

Nach Abkühlung des Zuschnitts wird dieser aus der Form entfernt und beschnitten, wobei etwa 3/4 der Fläche als Verschnitt abfallen. Das Beschneiden kann auf beliebige Weise, z. B. mit einer Stanze, einer zweiteiligen Schneidschablone o. dgl., ausgeführt werden.

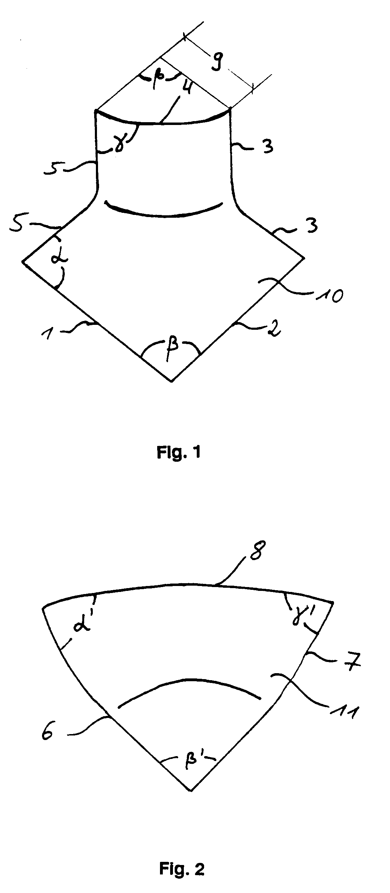

In Fig. 1 ist eine entsprechend hergestellte Außenecke 10 dargestellt, wobei die Länge der Bodenschenkel 1, 2 jeweils 170 mm und die der Boden-/Wandschenkel 3, 5 jeweils 170 mm beträgt. Der Radius 9 der oberen horizontalen Wandanschlußkante beträgt 50 mm, ebenso der Radius der Schenkel 3 und 5 im Bereich der Boden-/Wandhohlkehle. Sämtliche Schenkel 1, 2, 3, 4 und 5 stehen im rechten Winkel α, β, γ zueinander.

In Fig. 2 ist eine entsprechend hergestellte Innenecke 11 dargestellt, wobei die Länge der Boden-/Wandschenkel 6, 7 jeweils 170 mm, deren Radien sowie. der Radius der oberen horizontalen Abschlußkante je 50 mm betragen. Die Winkel α', β' und γ' betragen jeweils 90°.

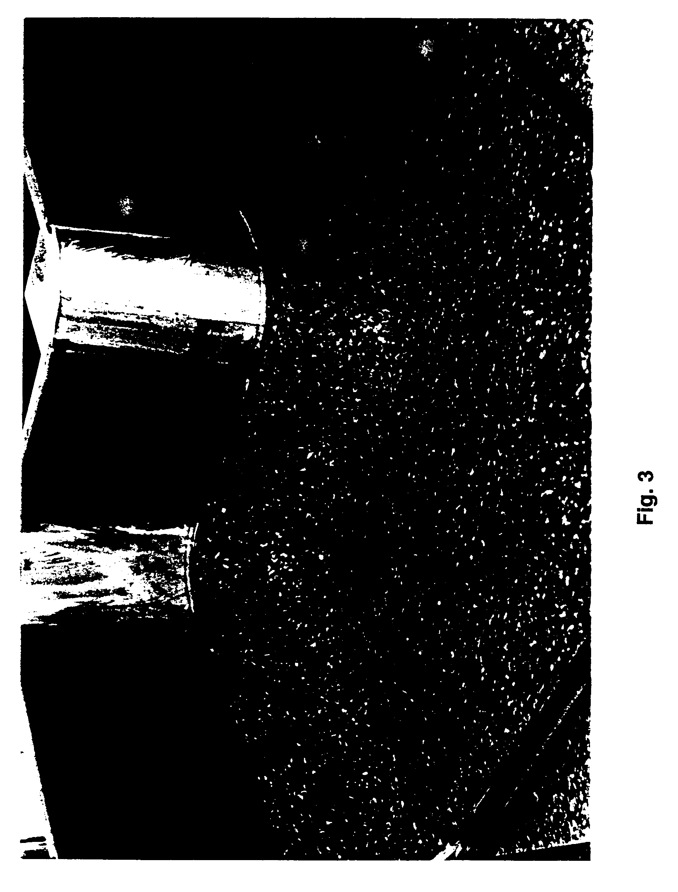

In Fig. 3 ist ein kompletter Boden-Wand-Abschluß mit einer erfindungsgemäßen 90°-Innenecke 11 (links) und einer 90°-Außenecke 10 (rechts) dargestellt. Im Anschluß an die erfindungsgemäßen Sockelleisten-Eckstücke 10, 11 wurde eine aus ebenem Bodenbelag gebogene Sockelleiste mit einer Kantenlänge von 170 mm und einem Biegeradius von 50 mm verwendet. Zur Verlegung der Sockelleisten wird zunächst ein handelsübliches Hohlkehlenprofil mit 50 mm Radius in die Boden-/Wandübergänge genagelt oder geklebt, wobei die Eckbereiche ausgespart werden. Die Ecken können entweder mit entsprechenden Formstücken unterfüttert werden, ggf. können diese jedoch auch nach Anpassen der Sockelleisten-Eckstücke 10, 11 hinterschäumt werden.

Die Verbindung der Sockelleisten-Eckstücke 10, 11 mit den angrenzenden Sockelleisten sowie dem Bodenbelag erfolgt in an sich bekannter Weise durch Thermo- oder Flüssigverschweißung.

Mit dem erfindungsgemäßen Verfahren ist erstmals die Herstellung von nahtlosen Sockelleisten-Eckstücken mit richtungsfreier Dessinierung und in jeder Richtung gerundeter Form möglich, wobei sowohl homogene als auch heterogene Beläge verwendet werden können.

Das erfindungsgemäße Verfahren ist dabei nicht auf Eckwinkel von 90° beschränkt, sondern ist auch auf beliebige Winkel sowie beliebige Biegeradien anwendbar.

## Patentansprüche

1. Verfahren zur Herstellung von vorgefertigten, nahtlosen, dessinierten Sockelleisten-Eckstücken (10, 11), umfassend folgende Verfahrensschritte:
- ein im wesentlichen ebener, plattenförmiger Zuschnitt eines richtungsfrei dessinierten Boden- oder Wandbelages aus thermoplastischem Kunststoff mit einer Fläche, die wenigstens dem 1,2fachen der Fläche des fertigen Sockelleisten-Eckstückes (10, 11) entspricht, wird bis zur thermoplastischen Verformbarkeit erwärmt,
- der erwärmte Zuschnitt wird entsprechend der dreidimensionalen Form des Sockelleisten-Eckstückes (10, 11) verformt,
- der verformte Zuschnitt wird unter Beibehaltung der Form abgekühlt,
- der abgekühlte Zuschnitt wird entlang der Kanten (1, 2, 3, 4, 5, 6, 7, 8) des Sockelleisten-Eckstückes (10, 11) beschnitten.

2. Verfahren nach Anspruch 1, **dadurch gekennzeichnet**, daß die Dicke des Sockelleisten-Eckstückes (10, 11) entlang der beschnittenen Kanten (1, 2, 3, 4, 5, 6, 7, 8) innerhalb einer Toleranzbreite von 30 %, bevorzugt 10 %, liegt.

3. Verfahren nach einem der Ansprüche 1 oder 2, **dadurch gekennzeichnet**, daß die Verformung mittels einer mehrteiligen Form erfolgt.

4. Verwendung eines richtungsfrei dessinierten Boden- oder Wandbelages zur Herstellung von vorgefertigten nahtlosen Sockelleisten-Eckstücken (10, 11) durch thermoplastische Verformung.

## Claims

1. Method for the manufacture of prefabricated seamless skirting board corner pieces (10, 11) having a pattern, comprising the following procedural steps:
- an essentially flat, plate-shaped section of a non-directionally patterned board for floor or wall formed of thermoplastic plastics with a surface which corresponds at least to 1.2 times the surface of the final skirting board corner piece (10, 11) is heated to make it thermoplastically deformable,
- the heated section is deformed corresponding to the three-dimensional shape of the skirting board corner piece (10, 11),
- the deformed section is cooled while subject to maintenance of shape,
- the cooled section is cut along the edges (1, 2, 3, 4, 5, 6, 7, 8) of the skirting board corner piece (10, 11).

2. Method according to claim 1 **characterized in that** the thickness of the skirting board corner piece (10, 11) along the cut edges (1, 2, 3, 4, 5, 6, 7, 8) lies within a tolerance width of 30%, preferably 10%.

3. Process according to one of claims 1 or 2, **characterized in that** the deformation takes place by means of a multi-part mould.

4. Use of a non-directionally patterned board for floor or wall for the production of prefabricated seamless skirting board corner pieces (10, 11) by thermoplastic deformation.

## Revendications

1. Procédé de fabrication d'angles de plinthes (10, 11) préfabriqués sans soudure et à motifs comprenant les étapes suivantes:
- on chauffe jusqu'à l'état permettant son formage thermoplastique un flan sensiblement plan en forme de plaque d'un revêtement de sol ou d'un revêtement mural en matière thermoplastique à motif non orienté dont la surface correspond au moins à 1,2 fois la surface de l'angle de plinthe (10, 11) terminé,
- on met en forme le flan réchauffé conformément à la forme tri-dimensionnelle de l'angle de plinthe (10, 11),
- on refroidit le flan mis en forme en maintenant sa forme,
- on recoupe le flan refroidi le long des bords (1, 2, 3, 4, 5, 6, 7, 8) de l'angle de plinthe (10, 11).

2. Procédé selon la revendication 1, caractérisé par le fait que l'épaisseur de l'angle de plinthe (10, 11) au niveau des bords (1, 2, 3, 4, 5, 6, 7, 8) recoupés se situe dans une plage de tolérance de 30%, de préférence 10%.

3. Procédé selon l'une des revendications 1 ou 2, caractérisé par le fait que l'on réalise la mise en forme au moyen d'une forme en plusieurs parties.

4. Utilisation d'un revêtement de sol ou d'un revêtement murat à motif non orienté pour fabriquer des angles de plinthes (10, 11) par formage thermoplastique.
